# FASCICULE DE BREVET EUROPEEN

(11) **EP 2 622 227 B1**
(45) Date de publication et mention de la délivrance du brevet: **25.03.2020**
(21) Numéro de dépôt: 11749126.6
(22) Date de dépôt: 28.07.2011
(51) Int. Cl.: F04D 29/38

(54) **HÉLICE POUR VENTILATEUR DONT LA LONGUEUR DE CORDE VARIE**
PROPELLER FÜR EINEN VENTILATOR MIT VERÄNDERBARER SEHNENLÄNGE
PROPELLER FOR VENTILATOR, WITH A VARIABLE CHORD LENGTH

(30) Priorité: 29.09.2010 FR 1057868
(43) Date de publication de la demande: 07.08.2013
(73) Titulaire: Valeo Systemes Thermiques, 78320 Le Mesnil Saint Denis (FR)
(72) Inventeur: HENNER, Manuel, F-78310 Auffargis (FR); DEMORY, Bruno, F-95640 Marines (FR); TANNOURY, Elias, F-75014 Paris (FR)
(74) Mandataire: Neuviale, Bertrand
(86) Numéro de dépôt international: PCT/EP2011/063047
(87) Numéro de publication internationale: WO 2012/041565

(56) Documents cités:
- EP-A2- 1 577 562
- KR-B1- 100 663 965
- US-A- 632 740
- US-A- 4 089 618
- US-A- 5 906 179
- US-A1- 2003 012 656
- US-A1- 2006 165 526

## Description

L'invention concerne une hélice de ventilateur comprenant un moyeu et des pales s'étendant radialement vers l'extérieur à partir du moyeu. De telles hélices sont connues des documents US 5 906 179 A et KR 100 663 965 B1.

De telles hélices sont utilisées notamment pour le refroidissement du moteur d'entraînement de véhicules automobiles, l'hélice produisant un flux d'air à travers un échangeur de chaleur.

Le moyeu de l'hélice, appelé aussi « bol », est propre à être calé sur l'arbre d'un moteur, pouvant être un moteur électrique piloté par une électronique de commande. Dans le cas où une telle hélice est utilisée pour le refroidissement d'un moteur de véhicule automobile, elle se trouve placée soit en avant soit en arrière du radiateur servant au refroidissement du moteur.

La conception de ces hélices pose de nombreux problèmes en pratique lorsque l'on cherche à améliorer leurs performances tant aérauliques qu'acoustiques.

Il faut en effet prendre en compte des critères aérodynamiques que l'on connaît par la théorie des profils (traînée et portance) et par les règles d'équilibre radial car la pression totale doit s'équilibrer en l'absence de pertes d'entropie.

Pour respecter ces critères, les pales sont réalisées, de façon connue, avec un angle de calage qui augmente avec le rayon.

Le calage est défini par l'angle qui existe entre la corde et l'axe de rotation, la corde étant définie comme le segment de droite reliant le bord d'attaque et le bord de fuite de la pale sur la section transversale aplatie.

On connaît typiquement des hélices présentant un angle de calage de 65° en pied et augmentant jusqu'à 75° en tête.

Les pales étant de nature tri-dimensionnelle, des écoulements secondaires notamment en leur pied et leur tête se produisent. A ces endroits, la pale est raccordée respectivement au moyeu et à la virole tournante. L'écoulement y est perturbé et des décollements aérodynamiques y prennent naissance.

On a essayé de résoudre ces problèmes à l'aide d'hélices présentant des pales pour lesquelles l'angle de calage diminue localement à proximité de la tête. Ces hélices apportent satisfaction au niveau de la tête mais sans réduire les écoulements secondaires ailleurs.

L'invention vise à proposer une telle hélice dont la forme permet de limiter les écoulements secondaires au niveau de la tête et du pied de la pale mais également de façon générale sur toute l'envergure de la pale.

A cet effet, l'invention propose une hélice de ventilateur, notamment pour le refroidissement du moteur d'entraînement d'un véhicule automobile, comprenant un moyeu, une virole et des pales s'étendant radialement entre le moyeu et la virole, chaque pale comportant un pied à sa jonction avec le moyeu et une tête à la jonction avec la virole, chaque pale présentant un bord d'attaque et un bord de fuite entre lesquels, à chaque section transversale aplatie, est définie une corde. Pour chaque pale, entre le pied et la tête, la longueur de la corde varie et la variation de la longueur de corde entre le pied et la tête présente un point d'inflexion entre deux paliers.

Ainsi, en faisant varier la longueur de corde, les perturbations induites par le bol et par la virole sont prises en compte pour les écoulements secondaires et on limite au pied et au niveau de la tête et sur toute l'envergure de la pale les écoulements secondaires.

Selon l'invention la variation de la longueur de corde présente trois paliers avec un point d'inflexion entre deux paliers consécutifs.

Selon la direction radiale, la longueur de la corde diminue avec le rayon jusqu'à un premier palier, la longueur de corde augmente avec le rayon jusqu'à un deuxième palier et la longueur de corde diminue à nouveau avec le rayon jusqu'à un troisième palier.

Eventuellement, la longueur de corde augmente brusquement entre le troisième palier et la tête de la pale.

Selon une variante du mode de réalisation, selon la direction radiale, la longueur de la corde augmente avec le rayon jusqu'à un premier palier, la longueur de corde diminue avec le rayon jusqu'à un deuxième palier et la longueur de corde augmente à nouveau avec le rayon jusqu'à un troisième palier.

Eventuellement, la longueur de corde diminue brusquement entre le troisième palier et la tête.

En combinaison avec certaines des caractéristiques précédentes, entre le pied et la tête, l'angle de calage varie et la variation de l'angle de calage entre le pied et la tête présente un point d'inflexion entre un premier palier et un deuxième palier.

Eventuellement, selon la direction radiale qui s'étend du pied vers la tête, l'angle de calage augmente brusquement avec le rayon jusqu'au premier palier et l'angle de calage augmente à nouveau avec le rayon entre le premier palier et le deuxième palier.

Au niveau de la tête, on peut prévoir que l'angle de calage diminue brusquement entre le deuxième palier et la tête de la pale.

Selon une variante de réalisation, selon la direction radiale qui s'étend du pied vers la tête, l'angle de calage diminue brusquement avec le rayon jusqu'au premier palier et l'angle de calage diminue à nouveau avec le rayon entre le premier palier et le deuxième palier.

Et éventuellement l'angle de calage augmente brusquement entre le deuxième palier et la tête de la pale.

L'hélice selon l'invention présente seules ou en combinaison les caractérisitques suivantes :
- au moins l'un des bord d'attaque et bord de fuite présente une ondulation concave et se prolonge par une ondulation convexe ; et/ou
- l'ondulation convexe est disposée entre deux ondulations concaves ; et/ou
- l'ondulation concave est disposée entre deux ondulations convexes ; et/ou
- chaque pale présente une face qui s'étend entre le bord d'attaque et le bord de fuite, qui présente un creux et qui se prolonge par une bosse ; et/ou
- la bosse est disposée entre deux creux.

Les caractéristiques et avantages de l'invention ressortiront de la description qui suit, donnée à titre d'exemple préféré, mais non limitatif, en référence aux dessins annexés, sur lesquels :
- la figure 1 est une vue de face d'une hélice de l'art antérieur ;
- la figure 2 est une vue partielle en coupe de l'hélice de la figure 1 avec une pale coupée selon une section transversale ;
- la figure 3 est une vue en coupe de la pale de l'hélice de la figure 2 selon la section transversale aplatie ;
- la figure 4 est une vue en perspective de la face avant d'une hélice selon l'invention ;
- la figure 5 est une vue en perspective de la face arrière de l'hélice de la figure 4 ;
- les figures 6, 7 et 8 sont des vues en perspectives selon trois angles différents d'une pale selon l'invention ;
- les figures 9 et 10 sont des graphes montrant des courbes représentant respectivement la variation du calage et la variation de la longueur de la corde en fonction de la distance au pied de la pale ;
- les figures 11 et 12 sont des graphiques similaires à ceux des figures 9 et 10 pour une variante de pale.

L'hélice 1 représentée sur les figures comprend de façon classique une pluralité de pales 2 s'étendant généralement radialement à partir du moyeu central 3 et reliées entre elles, à la périphérie de l'hélice 1, par une virole 4. Le moyeu 3, les pales 2 et la virole 4 sont formés d'une pièce par moulage de matière plastique.

Le moyeu 3 présente une paroi annulaire cylindrique de révolution 5, à laquelle se raccordent les pieds 6 de pales 2, et une paroi frontale plane 7, tournée vers l'amont. Les termes amont et aval se référent ici au sens du flux d'air produit par la rotation de l'hélice 1. Les parois frontale 7 et annulaire 5 sont reliées entre elles par un arrondi à profil en arc de cercle.

En direction de l'axe de l'hélice, la paroi frontale se raccorde à un manchon central surmoulé sur un insert annulaire métallique 8 destiné à la liaison de l'hélice 1 à l'arbre d'un moteur d'entraînement non représenté. Des nervures de renforcement sont prévues à l'intérieur du moyeu 3.

La virole 4 présente également une paroi annulaire cylindrique de révolution 10, à laquelle se raccordent les têtes 11 aux extrémités des pales 2, et qui se prolonge, du côté amont, par un évasement arrondi.

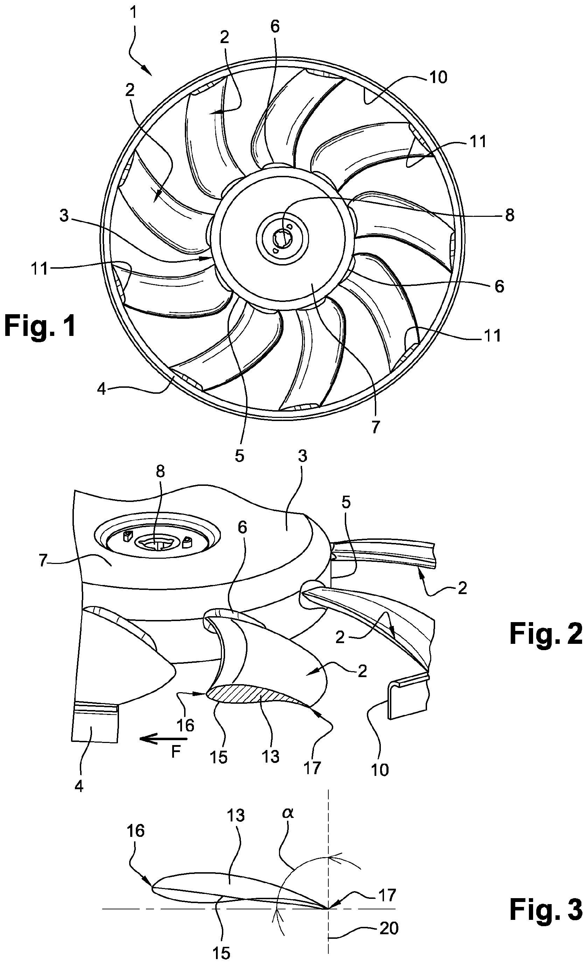

Pour la suite, on définit l'expression « section transversale aplatie 13 » comme la courbe fermée plane obtenue en coupant la pale par une surface cylindrique de révolution autour de l'axe de l'hélice 1, et en déroulant à plat cette surface cylindrique. La section transversale 13 de l'art antérieur, représentée sur les figures 2 et 3, possède une forme profilée aérodynamiquement comme un profil d'aile d'avion..

La corde 15 est alors définie comme le segment de droite reliant le bord d'attaque 16 et le bord de fuite 17 sur la section transversale aplatie. L'hélice 1 tourne dans un sens défini par le sens « bord de fuite vers bord d'attaque ». Le calage α, ou angle de calage, est défini par l'angle qui existe entre la corde 15 et l'axe de rotation 9. Comme on le voit sur la figure 3, on a représenté l'angle de calage α entre la corde 15 et un axe 20 parallèle à l'axe de rotation 9 de l'hélice 1.

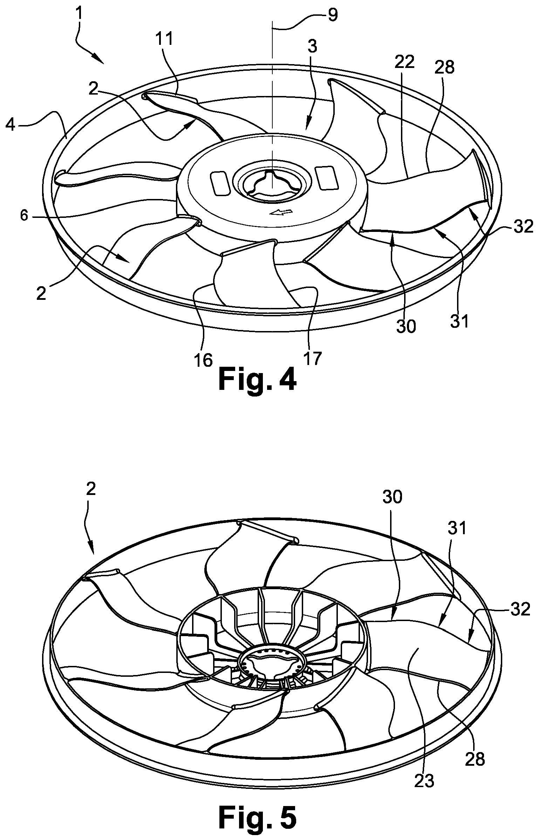

En référence aux figures 4 à 8, on décrit l'hélice selon un mode de réalisation de l'invention pour laquelle on garde les mêmes références que pour l'hélice de l'art antérieur représentée aux figures 1 à 3.

L'hélice 1 diffère de l'hélice de l'art antérieur par la forme des pales 2.

On décrit maintenant les pales 2 de l'hélice 1. Celle-ci comporte sept pales 2 identiques qui s'étendent du moyeu 3 à la virole 4 et sont réparties angulairement de façon régulière autour du moyeu 3.

Chaque pale 2 présente une face amont 22 et une face aval 23, les faces amont 22 étant visibles sur la figure 4 tandis que les faces aval 23 sont visibles sur la figure 5.

Les pales 2 étant identiques entre elles, on n'en décrit qu'une, en référence aux figures 4 à 10.

De façon générale, la forme de la pale 2 est obtenue en faisant varier du pied 6 vers la tête 11, la longueur de corde 15 d'une part et l'angle de calage a. La variation de la longueur de corde 15 a un effet sur la largeur de la pale 2. Elle se traduit par une présence d'ondulations sur le bord ici d'attaque. La variation du calage α a un effet sur le relief de la pale 2 en créant des bosses et des creux.

La pale 2 présente un bord d'attaque 16 qui ondule. En partant du pied 6, le bord 16 commence par une ondulation ou courbe concave 25. La courbe concave 25 se prolonge par une courbe convexe 26 qui elle-même se prolonge par une courbe concave 27. La courbe 27 présente son extrémité opposée au pied 6 au niveau de la tête 11 à la jonction entre la pale 2 et la virole 4.

On définit trois points déterminés 30, 31, 32 sur le bord d'attaque 16 de la pale 2. Le point 30 est situé à proximité du pied 6. Le point 31 est situé dans une zone à mi-distance de la pale entre le pied 6 et la tête 11. Le point 32 est lui situé à proximité de la tête 11.

Le point 30 est situé sur le sommet de la courbe concave 25 ; le point 31 est situé sur le sommet de la courbe 26 ; le point 32 est situé sur le sommet de la courbe 27.

Le bord de fuite 17 présente lui une courbe présentant une seule concavité, plus plate, c'est-à-dire qu'il présente un large palier central 28 à peu près plat.

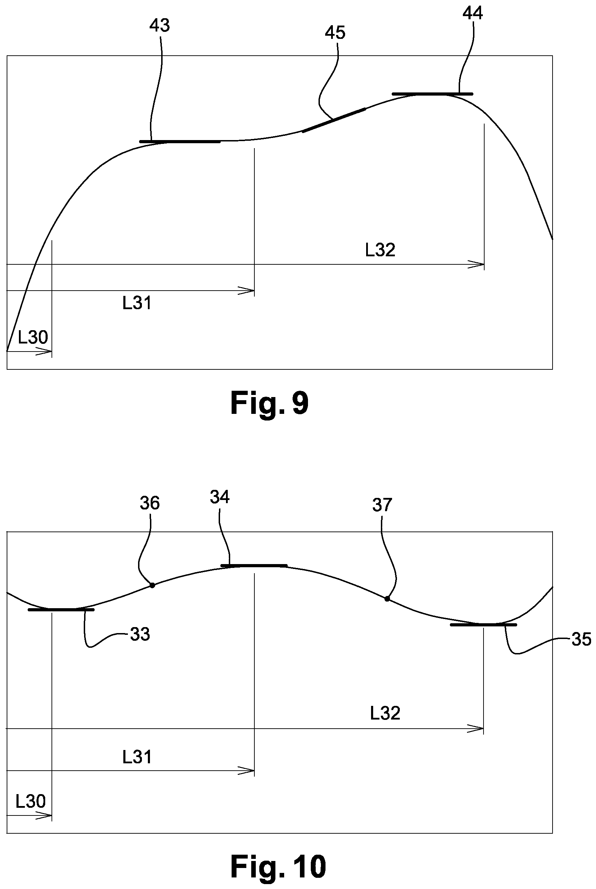

On se réfère maintenant à la figure 10 qui montre l'évolution de la longueur de la corde 15 par rapport à l'envergure de la pale 2 c'est-à-dire par rapport à la distance au pied 6. Sur cette figure on a reporté les valeurs L30, L31 et L32 qui correspondent à la distance des points 30, 31 et 32 au pied 6 de la pale 2.

Le graphe montre qu'entre le pied 6 et le point 30, c'est-à-dire sur la longueur L30, la longueur de la corde diminue. Elle atteint à ce point 30 un premier minimum. Et autour de ce point 30, l'évolution de la longueur de corde se fait sur un palier 33 où la longueur de corde n'évolue quasiment pas. Ici et dans la suite on considère que la longueur n'évolue quasiment pas lorsque sur une plage de 10% de l'envergure de la pale, la longueur de corde n'évolue pas plus de 5%. Selon une variante, on peut prévoir un palier pour lequel l'évolution de corde n'est de pas plus que 3%.

Sur la longueur L31 otée de la longueur L30 et donc entre les points 30 et 31, la longueur de corde augmente. Cette longueur de corde atteint un maximum au point 31. Et autour de ce point 31, l'évolution de la longueur de corde se fait sur un palier 34 où la longueur de corde n'évolue quasiment pas.

Entre les deux paliers 33, 34 et donc entre le minimum correspondant au point 30 et le maximum correspondant au point 31, la courbe de l'évolution de la corde présente un premier point d'inflexion 36.

Sur la longueur L32 otée de la longueur L31, c'est-à-dire entre les points 31 et 32 de la pale, la longueur de corde diminue à nouveau pour atteindre un deuxième minimum. Et autour de ce point 32, l'évolution de la longueur de corde se fait sur un palier 35 où la longueur de corde n'évolue quasiment pas.

Entre les deux paliers 34, 35 et donc entre le maximum correspondant au point 31 et le deuxième minimum correspondant au point 32, la courbe de l'évolution de la corde présente un deuxième point d'inflexion 37.

Sur le reste de la longueur de pale 2, c'est-à-dire entre le point 32 et la tête 11 de la pale 2, la longueur de corde augmente brusquement. Par brusquement, on entend que la pente de l'augmentation entre le point 32 et la tête 11 est beaucoup plus importante, en valeur absolue, que la pente de la diminution entre le point 31 et le point 32.

Ces variations de la longueur de corde traduisent les ondulations du bord d'attaque tel que précédemment décrit.

Selon une variante de réalisation non représentée, entre le pied 6 et le point 30, la longueur de la corde diminue brusquement. Ici aussi, et comme par la suite, brusquement signifie qu'en valeur absolue, la pente est beaucoup plus importante sur ce segment que sur un segment ou la variation n'est pas qualifiée de brusque.

Comme la longueur de corde 15, la valeur de l'angle de calage α varie entre le pied 6 et la tête 11. Cela se traduit notamment par la présence de reliefs sur les faces de la pale 12.

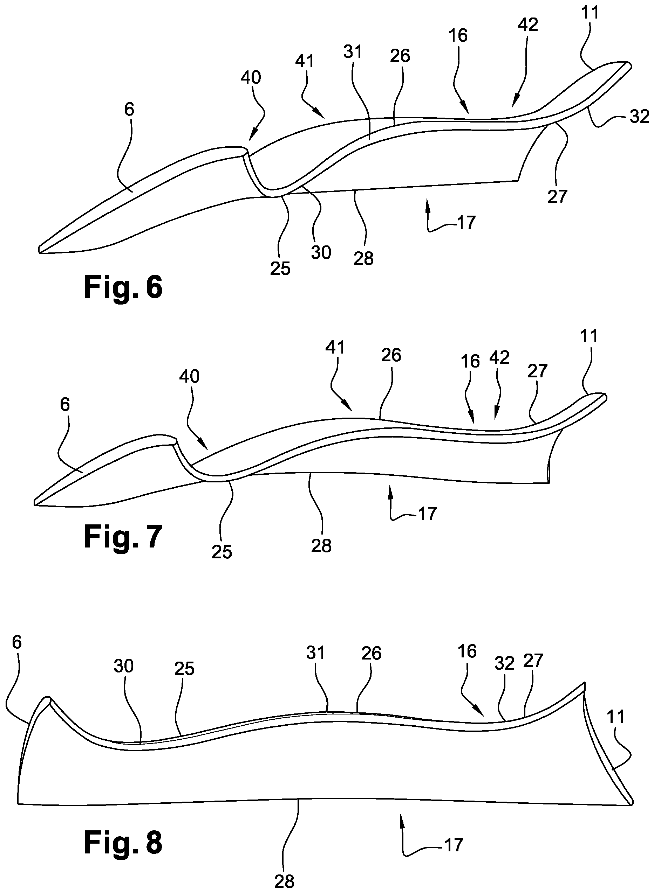

Ainsi, comme on le voit sur les figures 6 à 8, la face amont 22 de la pale 2 présente du côté du pied 6 un creux 40. En milieu de face 22, celle-ci présente une bosse 41. Et du côté de la tête 11, la surface présente à nouveau un creux 42 de sorte que la face 22 présente une bosse 41 avec de part et d'autre un creux 40, 42. La bosse 41 et les creux 40, 42 s'étendent approximativement sur toute la largeur de la face 22 même si les sommets ou minimums de ces creux ou bosse ne se trouvent pas ici sur les bords 16, 17.

La face aval présente, elle, des reliefs opposés.

On se réfère maintenant à la figure 9 qui montre l'évolution de l'angle de calage α par rapport à l'envergure de la pale 12 c'est-à-dire par rapport à la distance au pied 6. Sur cette figure on a également reporté les valeurs L30, L31 et L32.

Le calage α augmente brusquement du pied 6 sur toute la longueur L30 et continue à augmenter fortement jusqu'à un palier 43 qui se situe entre les points 30 et 31. Dans la zone du palier 43, le calage α se maintient à une valeur constante puis augmente à nouveau à partir du point 31. L'augmentation se poursuit et passe par un point d'inflexion 45. Après le point d'inflexion 45 le calage α augmente encore jusqu'à un second palier 44. Le second palier 44 est situé entre le point 31 et le point 32, un peu avant le point 32. Après le palier 44 et plus nettement après le point 32, le calage α diminue brusquement jusqu'à la tête 11.

Selon une variante non représentée, après le palier 43, la valeur du calage α diminue jusqu'à un minimum pour augmenter ensuite.

Ces variations de l'angle de calage sont une traduction la forme de la pale 2 avec ses creux et bosse telle que décrite précédemment.

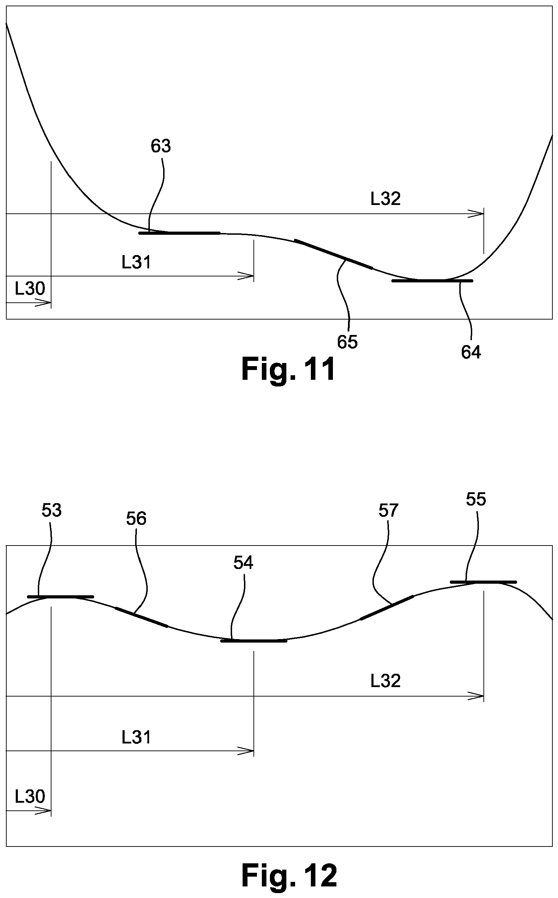

Selon une variante représentée aux figures 11 et 12, décrites par la suite en détails, les évolutions de longueur de corde et de calage α sont inversées par rapport à ce que a été décrit précédemment en référence aux figures 9 et 10.

On se réfère maintenant à la figure 12 qui montre l'évolution de la longueur de la corde 15 par rapport à l'envergure de la pale 12 c'est-à-dire par rapport à la distance au pied 6. Sur cette figure on a reporté les valeurs L30, L31 et L32 qui correspondent à la distance des points 30, 31 et 32 au pied 6 de la pale 2.

Le graphe montre qu'entre le pied 6 et le point 30, c'est-à-dire sur la longueur L30, la longueur de la corde augmente. Elle atteint à ce point 30 un premier maximum. Et autour de ce point 30, l'évolution de la longueur de corde se fait sur un palier 53 où la longueur de corde n'évolue quasiment pas.

Sur la longueur L31 otée de la longueur L30 et donc entre les points 30 et 31, la longueur de corde augmente. Cette longueur de corde atteint un maximum. Et autour de ce point 31, l'évolution de la longueur de corde se fait sur un palier 54 où la longueur de corde n'évolue quasiment pas.

Entre les deux paliers 53, 54 et donc entre le maximum correspondant au point 30 et le minimum correspondant au point 31, la courbe de l'évolution de la corde présente un premier point d'inflexion 56.

Sur la longueur L32 otée de la longueur L31, c'est-à-dire entre les points 31 et 32 de la pale, la longueur de corde augmente à nouveau pour atteindre un deuxième maximum. Et autour de ce point 32, l'évolution de la longueur de corde se fait sur un palier 55 où la longueur de corde n'évolue quasiment pas.

Entre les deux paliers 54, 55 et donc entre le minimum correspondant au point 31 et le deuxième maximum correspondant au point 32, la courbe de l'évolution de la corde présente un deuxième point d'inflexion 57.

Sur le reste de la longueur de pale 2, c'est-à-dire entre le point 32 et la tête 11 de la pale 2, la longueur de corde diminue brusquement.

Selon une variante de réalisation non représentée, entre le pied 6 et le point 30, la longueur de la corde augmente brusquement.

Bien qu'on n'ait pas représenté la pale 2 selon cette variante, par analogie, le bord d'attaque 16 ondule vers et à l'écart du bord d'attaque 17. En partant du pied 6, le bord 16 commence par une ondulation ou courbe convexe. La courbe convexe se prolonge par une courbe concave qui elle-même se prolonge par une courbe concave. La courbe présente son extrémité opposée au pied 6 au niveau de la tête 11 à la jonction entre la pale 2 et la paroi 5 du moyeu 3.

Comme la longueur de corde 15, la valeur de l'angle de calage α varie entre le pied 6 et la tête 11. Cela se traduit notamment par la présence de relief sur les faces de la pale 12.

Ainsi, bien qu'on n'ait pas représenté en perspective la pale 2 dont on a tiré les graphes des figures 11 et 12, celle-ci présente du côté du pied 6 une bosse. En milieu d'envergure de face 22, celle-ci présente un creux. Et du côté de la tête 11, la surface présente à nouveau une bosse de sorte que la face 22 présente un creux avec de part et d'autre une bosse. Le creux et les bosses s'étendent approximativement sur toute la largeur de la face 22. La face aval présente, elle, des reliefs opposés.

On se réfère maintenant à la figure 11 qui montre l'évolution de l'angle de calage α par rapport à l'envergure de la pale 12 c'est-à-dire par rapport à la distance au pied 6. Sur cette figure on a également reporté les valeurs L30, L31 et L32.

Le calage α diminue brusquement du pied 6 sur toute la longueur L30 et continue à diminuer fortement jusqu'à un palier 63 qui se situe entre les points 30 et 31. Dans la zone du palier 63, le calage α se maintient à une valeur constante puis diminue à nouveau à partir du point 31. La diminution se poursuit et passe par un point d'inflexion 65. Après le point d'inflexion 65 le calage α diminue encore jusqu'à un second palier 64. Le second palier 64 est situé entre le point 31 et le point 32, un peu avant le point 32. Après le palier 64 et plus nettement après le point 32, le calage α augmente brusquement jusqu'à la tête 11.

On a représenté les pales 2 avec des reliefs traduisant la variation de l'angle de calage. En restant dans le cadre de l'invention, on peut prévoir des pales qui ne présentent pas ces reliefs mais seulement les variations de longueur de corde.

Selon une variante de réalisation, le bord de fuite présente également un profil avec deux courbes concaves entourant une courbe convexe ou inversement en fonction du profil du bord d'attaque. Dans cette variante, le bord d'attaque présente ou pas un profil équivalent.

Selon un autre mode de réalisation non représenté, on ne fait varier du pied à la tête que la longueur de corde tandis que l'angle de calage α ne varie pas. Cela se traduit par une orientation constante de la section transversale et donc une absence de reliefs (creux et bosses consécutivement).

La présente invention n'est pas limitée au mode de réalisation décrit et représenté mais englobe toute variante d'exécution comme définie par les revendications suivantes.

## Revendications

1. Hélice de ventilateur, notamment pour le refroidissement du moteur d'entraînement d'un véhicule automobile, comprenant un moyeu (3), une virole (4) et des pales (2) s'étendant radialement entre le moyeu (3) et la virole (4), chaque pale (2) comportant un pied (6) à sa jonction avec le moyeu (3) et une tête (11) à la jonction avec la virole (4), chaque pale (2) présentant un bord d'attaque (16) et un bord de fuite (17) entre lesquels, à chaque section transversale aplatie, est définie une corde (15), et pour chaque pale (2), selon la direction radiale du pied (6) vers la tête (11), la longueur de la corde (15) varie, **caractérisée en ce que** la variation de la longueur de corde présente trois paliers (33, 34, 35 ; 53, 54, 55) avec un point d'inflexion (36, 37 ; 56, 57) entre deux paliers consécutifs.

2. Hélice selon la revendication 1, **caractérisée en ce que**, selon la direction radiale, la longueur de la corde (15) diminue avec le rayon jusqu'à un premier palier (33), la longueur de corde (15) augmente avec le rayon jusqu'à un deuxième palier (34) et la longueur de corde (15) diminue à nouveau avec le rayon jusqu'à un troisième palier (35).

3. Hélice selon l'une quelconque des revendications 1 ou 2, **caractérisée en ce que**, selon la direction radiale, la longueur de corde (15) augmente brusquement entre le troisième palier (35) et la tête (11) de la pale (2).

4. Hélice selon la revendication 1, **caractérisée en ce que**, selon la direction radiale, la longueur de la corde (15) augmente avec le rayon jusqu'à un premier palier (53), la longueur de corde (15) diminue avec le rayon jusqu'à un deuxième palier (54) et la longueur de corde (15) augmente à nouveau avec le rayon jusqu'à un troisième palier (55).

5. Hélice selon l'une quelconque des revendications 1 ou 4, **caractérisée en ce que** la longueur de corde (15) diminue brusquement entre le troisième palier (55) et la tête (11).

6. Hélice selon l'une quelconque des revendications 1 à 5, **caractérisée en ce qu'**entre le pied (6) et la tête (11), l'angle de calage (α) varie et **en ce que** la variation de l'angle de calage (α) entre le pied (6) et la tête (11) présente un point d'inflexion (45 ; 65) entre un premier palier (43 ; 63) et un deuxième palier (44 ; 64).

7. Hélice selon la revendication 6, **caractérisée en ce que**, selon la direction radiale, l'angle de calage (α) augmente brusquement avec le rayon jusqu'au premier palier (43) et l'angle de calage (α) augmente à nouveau avec le rayon entre le premier palier (43) et le deuxième palier (44).

8. Hélice selon l'une quelconque des revendications 6 ou 7, **caractérisée en ce qu'**au niveau de la tête (11), l'angle de calage (α) diminue brusquement entre le deuxième palier (44) et la tête (11).

9. Hélice selon la revendication 6, **caractérisée en ce que**, selon la direction radiale, vers la tête (7), l'angle de calage (α) diminue brusquement avec le rayon jusqu'au premier palier (63) et l'angle de calage (α) diminue à nouveau avec le rayon entre le premier palier (63) et le deuxième palier (64).

10. Hélice selon l'une quelconque des revendications 6 ou 9, **caractérisée en ce que** l'angle de calage (α) augmente brusquement entre le deuxième palier (64) et la tête (11).

11. Hélice selon la revendication 1 à 10, **caractérisée en ce que** au moins l'un des bord d'attaque (16) et bord de fuite (17) présente une ondulation concave (25, 27) et se prolonge par une ondulation convexe (26).

12. Hélice selon la revendication 11, **caractérisée en ce que** l'ondulation convexe (26) est disposée entre deux ondulations concaves (25, 27).

13. Hélice selon la revendication 11, **caractérisée en ce que** l'ondulation concave est disposée entre deux ondulations convexes.

14. Hélice selon l'une quelconque des revendications 1 à 13, **caractérisée en ce que** chaque pale (2) présente une face (22) qui s'étend entre le bord d'attaque (16) et le bord de fuite (17), qui présente un creux (40, 42) et qui se prolonge par une bosse (41).

15. Hélice selon la revendication 14, **caractérisée en ce que** la bosse (41) est disposée entre deux creux (40, 42).

## Patentansprüche

1. Lüfterrad eines Ventilators, insbesondere zur Kühlung des Antriebsmotors eines Kraftfahrzeugs, welches eine Nabe (3), einen Ring (4) und Blätter (2), die sich radial zwischen der Nabe (3) und dem Ring (4) erstrecken, umfasst, wobei jedes Blatt (2) einen Fuß (6) an seiner Verbindungsstelle mit der Nabe (3) und einen Kopf (11) an der Verbindungsstelle mit dem Ring (4) aufweist, wobei jedes Blatt (2) eine Vorderkante (16) und eine Hinterkante (17) aufweist, zwischen denen an jedem abgeflachten Querschnitt eine Sehne (15) definiert ist, und für jedes Blatt (2) in der radialen Richtung vom Fuß (6) zum Kopf (11) die Länge der Sehne (15) variiert, **dadurch gekennzeichnet, dass** die Änderung der Sehnenlänge drei Plateaus (33, 34, 35; 53, 54, 55) aufweist, mit einem Wendepunkt (36, 37; 56, 57) zwischen zwei aufeinander folgenden Plateaus.

2. Lüfterrad nach Anspruch 1,
**dadurch gekennzeichnet, dass** in der radialen Richtung die Länge der Sehne (15) mit dem Radius bis zu einem ersten Plateau (33) abnimmt, die Länge der Sehne (15) mit dem Radius bis zu einem zweiten Plateau (34) zunimmt und die Länge der Sehne (15) mit dem Radius bis zu einem dritten Plateau (35) erneut abnimmt.

3. Lüfterrad nach einem der Ansprüche 1 oder 2,
**dadurch gekennzeichnet, dass** in der radialen Richtung die Länge der Sehne (15) zwischen dem dritten Plateau (35) und dem Kopf (11) des Blattes (2) abrupt zunimmt.

4. Lüfterrad nach Anspruch 1,
**dadurch gekennzeichnet, dass** in der radialen Richtung die Länge der Sehne (15) mit dem Radius bis zu einem ersten Plateau (53) zunimmt, die Länge der Sehne (15) mit dem Radius bis zu einem zweiten Plateau (54) abnimmt und die Länge der Sehne (15) mit dem Radius bis zu einem dritten Plateau (55) erneut zunimmt.

5. Lüfterrad nach einem der Ansprüche 1 oder 4,
**dadurch gekennzeichnet, dass** die Länge der Sehne (15) zwischen dem dritten Plateau (55) und dem Kopf (11) abrupt abnimmt.

6. Lüfterrad nach einem der Ansprüche 1 bis 5,
**dadurch gekennzeichnet, dass** zwischen dem Fuß (6) und dem Kopf (11) der Blattwinkel (α) variiert, und dadurch, dass die Änderung des Blattwinkels (α) zwischen dem Fuß (6) und dem Kopf (11) einen Wendepunkt (45; 65) zwischen einem ersten Plateau (43; 63) und einem zweiten Plateau (44; 64) aufweist.

7. Lüfterrad nach Anspruch 6,
**dadurch gekennzeichnet, dass** in der radialen Richtung der Blattwinkel (α) mit dem Radius bis zu dem ersten Plateau (43) abrupt zunimmt und der Blattwinkel (α) mit dem Radius zwischen dem ersten Plateau (43) und dem zweiten Plateau (44) erneut zunimmt.

8. Lüfterrad nach einem der Ansprüche 6 oder 7,
**dadurch gekennzeichnet, dass** am Kopf (11) der Blattwinkel (α) zwischen dem zweiten Plateau (44) und dem Kopf (11) abrupt abnimmt.

9. Lüfterrad nach Anspruch 6,
**dadurch gekennzeichnet, dass** in der radialen Richtung zum Kopf (7) hin der Blattwinkel (α) mit dem Radius bis zu dem ersten Plateau (63) abrupt abnimmt und der Blattwinkel (α) mit dem Radius zwischen dem ersten Plateau (63) und dem zweiten Plateau (64) erneut abnimmt.

10. Lüfterrad nach einem der Ansprüche 6 oder 9,
**dadurch gekennzeichnet, dass** der Blattwinkel (α) zwischen dem zweiten Plateau (64) und dem Kopf (11) abrupt zunimmt.

11. Lüfterrad nach Anspruch 1 bis 10,
**dadurch gekennzeichnet, dass** die Vorderkante (16) und/oder die Hinterkante (17) eine konkave Wellenform (25, 27) aufweist und durch eine konvexe Wellenform (26) verlängert ist.

12. Lüfterrad nach Anspruch 11,
**dadurch gekennzeichnet, dass** die konvexe Wellenform (26) zwischen zwei konkaven Wellenformen (25, 27) angeordnet ist.

13. Lüfterrad nach Anspruch 11,
**dadurch gekennzeichnet, dass** die konkave Wellenform zwischen zwei konvexen Wellenformen angeordnet ist.

14. Lüfterrad nach einem der Ansprüche 1 bis 13,
**dadurch gekennzeichnet, dass** jedes Blatt (2) eine Seite (22) aufweist, welche sich zwischen der Vorderkante (16) und der Hinterkante (17) erstreckt, welche eine Vertiefung (40, 42) aufweist und welche durch eine Erhebung (41) verlängert ist.

15. Lüfterrad nach Anspruch 14,
**dadurch gekennzeichnet, dass** die Erhebung (41) zwischen zwei Vertiefungen (40, 42) angeordnet ist.

## Claims

1. Blower wheel, notably for cooling the engine for driving a motor vehicle, comprising a hub (3), a guide (4) and blades (2) extending radially between the hub (3) and the guide (4), each blade (2) comprising a root (6) at its junction with the hub (3) and a head (11) at the junction with the guide (4), each blade (2) having a leading edge (16) and a trailing edge (17) between which, at each flattened cross section, a chord (15) is defined, and, for each blade (2), in the radial direction from the root (6) to the head (11), the length of the chord (15) varies, **characterized in that** the variation in the chord length has three levels (33, 34, 35; 53, 54, 55) with a point of inflexion (36, 37; 56, 57) between two consecutive levels.

2. Wheel according to Claim 1, **characterized in that**, in the radial direction, the length of the chord (15) reduces with the radius up to a first level (33), the length of chord (15) increases with the radius up to a second level (34) and the length of chord (15) reduces again with the radius up to a third level (35).

3. Wheel according to either one of Claims 1 and 2, **characterized in that**, in the radial direction, the length of chord (15) increases sharply between the third level (35) and the head (11) of the blade (2).

4. Wheel according to Claim 1, **characterized in that**, in the radial direction, the length of the chord (15) increases with the radius up to a first level (53), the length of chord (15) reduces with the radius up to a second level (54) and the length of chord (15) increases again with the radius up to a third level (55).

5. Wheel according to either one of Claims 1 and 4, **characterized in that** the length of chord (15) reduces sharply between the third level (55) and the head (11).

6. Wheel according to any one of Claims 1 to 5, **characterized in that**, between the root (6) and the head (11), the pitch angle (α) varies and **in that** the variation in the pitch angle (α) between the root (6) and the head (11) has a point of inflexion (45; 65) between a first level (43; 63) and a second level (44; 64).

7. Wheel according to Claim 6, **characterized in that**, in the radial direction, the pitch angle (α) increases sharply with the radius up to the first level (43) and the pitch angle (α) increases again with the radius between the first level (43) and the second level (44).

8. Wheel according to either one of Claims 6 and 7, **characterized in that** at the head (11), the pitch angle (α) reduces sharply between the second level (44) and the head (11).

9. Wheel according to Claim 6, **characterized in that**, in the radial direction, to the head (7), the pitch angle (α) reduces sharply with the radius up to the first level (63) and the pitch angle (α) reduces again with the radius between the first level (63) and the second level (64).

10. Wheel according to either one of Claims 6 and 9, **characterized in that** the pitch angle (α) increases sharply between the second level (64) and the head (11).

11. Wheel according to any one of Claims 1 to 10, **characterized in that** at least one of the leading edge (16) and trailing edge (17) has a concave undulation (25, 27) and is extended by a convex undulation (26).

12. Wheel according to Claim 11, **characterized in that** the convex undulation (26) is placed between two concave undulations (25, 27).

13. Wheel according to Claim 11, **characterized in that** the concave undulation is placed between two convex undulations.

14. Wheel according to any one of Claims 1 to 13, **characterized in that** each blade (2) has a face (22) which extends between the leading edge (16) and the trailing edge (17), which has a hollow (40, 42) and which is extended by a bump (41).

15. Wheel according to Claim 14, **characterized in that** the bump (41) is placed between two hollows (40, 42).
